# EUROPÄISCHE PATENTSCHRIFT

(11) **EP 3 206 929 B1**
(45) Veröffentlichungstag und Bekanntmachung des Hinweises auf die Patenterteilung: **21.11.2018**
(21) Anmeldenummer: 15766162.0
(22) Anmeldetag: 21.09.2015
(51) Int. Cl.: B60W 50/00, B60W 40/04

(54) **VERFAHREN ZUR FAHRASSISTENZ UNTER BERÜCKSICHTIGUNG EINER SIGNALANLAGE**
METHOD FOR DRIVING ASSISTANCE, IN ACCORDANCE WITH A SIGNAL SYSTEM
PROCÉDÉ DE COMMANDE D'AIDE À LA CONDUITE AVEC PRISE EN COMPTE D'UN SYSTÈME DE SIGNALISATION

(30) Priorität: 15.10.2014 DE 102014220935
(43) Veröffentlichungstag der Anmeldung: 23.08.2017
(73) Patentinhaber: Continental Automotive GmbH, 30165 Hannover (DE)
(72) Erfinder: PU, Hongjun, 35606 Solms (DE)
(86) Internationale Anmeldenummer: PCT/EP2015/071544
(87) Internationale Veröffentlichungsnummer: WO 2016/058784

(56) Entgegenhaltungen:
- WO-A1-2009/027173
- WO-A1-2011/117141
- DE-A1-102008 060 869
- DE-A1-102009 042 923
- DE-A1-102010 027 899
- DE-A1-102011 077 656
- DE-T5-112012 001 799

## Beschreibung

Die Erfindung liegt auf dem Gebiet der Elektrotechnik und ist mit besonderem Vorteil in der Automobiltechnik verwendbar. Sie bezieht sich konkret auf ein Verfahren zur Fahrassistenz bei einem Fahrzeug.

Fahrassistenzsysteme für Fahrzeuge werden seit langer Zeit in der Automobiltechnik diskutiert und auch realisiert. Frühe Beispiele für solche Assistenzsysteme sind beispielsweise Bremshilfen bzw. autarke Bremssysteme. Derartige Systeme können einerseits die Wahrnehmung des Fahrers durch Sensorik unterstützen oder teilweise ersetzen und/oder andererseits die Umsetzung von Handlungsabsichten des Fahrers unterstützen. Mit fortschreitender Technologie können immer mehr und immer komplexere Funktionen beim Fahren eines Fahrzeugs durch automatische Systeme übernommen werden und der Stand der heutigen Technologieentwicklung in diesem Bereich spiegelt sich in der Benennung aktueller Systeme als "ADAS" = Advanced Driving Assistent Systems wieder.

Derartige fortgeschrittene Assistenzsysteme beziehen Daten aus dem sogenannten elektronischen Horizont (eHorizon), d. h., einem Aggregat und Verfahren im Fahrzeug, das für den Fahrer sowie für bestimmte Assistenzeinrichtungen im Fahrzeug auf verschiedene Arten möglichst umfassend Informationen bereitstellt, die allein aufgrund der Wahrnehmung oder Sensorik nicht oder zu einem bestimmten Zeitpunkt noch nicht ohne Hilfe des eHorizon zur Verfügung stehen. Beispielsweise können durch das System Sensoren eingesetzt werden, die eine höhere Sensitivität haben als das menschliche Wahrnehmungssystem, andererseits können aber auch Informationen über in Fahrtrichtung vorausliegende Streckenabschnitte von Dritten angefordert oder einer Datenbank entnommen werden. So verfügt ein moderner eHorizon üblicherweise über Datenbankinformationen, die den in Fahrtrichtung vorausliegenden Streckenabschnitten eine Anzahl von Attributen, d. h. fahrtechnisch relevanten Eigenschaften beimessen.

Auf diese Weise kann beispielsweise der eHorizon signalisieren, dass eine zukünftige Fahrstrecke, die zurzeit noch nicht sichtbar ist, eine bestimmte Steigung oder ein bestimmtes Gefälle aufweist. Diese Information kann innerhalb eines Fahrzeugs der eHorizon an elektronische Steuereinrichtungen Assistenzeinrichtungen übermitteln, die das Führen des Fahrzeugs vorausschauend planen können. Auf diese Weise erlaubt ein eHorizon zusammen mit entsprechenden Planungsverfahren ein komfortables, vorausschauendes, energiesparendes, gegebenenfalls zeitsparendes, in jedem Fall jedoch besonders sicheres Fahren.

Um über eine Datenverbindung innerhalb eines Fahrzeugs Informationen eines eHorizon-Geräts für Steuereinrichtungen verfügbar zu machen, sind standardisierte Meldeverfahren bzw. -mechanismen entwickelt worden, von denen einige in dem ADASIS-forum diskutiert und im sogenannten ADASIS Protokoll festgelegt worden sind. Die Version 2 des ADASIS-Protokolls ist auf die vorausschauende Beurteilung einer besonders wahrscheinlichen zukünftigen Fahrstrecke spezialisiert, so dass speziell für diese wahrscheinlichste Fahrstrecke ausgewählte Informationen zur Verfügung gestellt werden können. Es ist möglich, über bestimmte Standardmeldungen über den eHorizon und die entsprechenden Kommunikationsmittel im Kraftfahrzeug Informationen über bestimmte singuläre Phänomene an der Fahrstrecke (beispielsweise eine Brücke, ein Fahrverbot, eine Tunneleinfahrt) oder bestimmte Fahrbahneigenschaften entlang der Strecke in Form eines Profils zu melden. Auf die Art dieser Meldungen sind elektronische Steuereinrichtungen im Fahrzeug eingerichtet.

Ein Nachteil bei den bestehenden Protokolllösungen ist, dass bisher üblicherweise nur statische Phänomene in die Meldungen einbezogen werden.

Zwar ist aus der gattungsgemäßen WO 2011/117141 bereits grundsätzlich die Idee bekannt, auch dynamische Größen über einen elektronischen Horizont mindestens einem Steuergerät des Fahrzeugs zur Verfügung zu stellen. Es ist dort auch diskutiert, dynamische Phänomene, beispielsweise in Form einer Ampel in den elektronischen Horizont zu integrieren.
Jedoch ist bislang kein konkreter Weg aufgezeigt worden, wie mit den bekannten Protokollen die zeitlichen Bedingungen bei zeitlich veränderlichen Phänomenen an der Fahrstrecke oder an der wahrscheinlichsten zukünftigen Fahrstrecke berücksichtigt werden können.
Der vorliegenden Erfindung liegt daher die Aufgabe zugrunde, ein System und ein Verfahren zur Fahrassistenz zu schaffen, mit dem in möglichst günstiger Weise ein dynamischer Prozess durch Signale im Fahrzeug, insbesondere bei einem eHorizon repräsentiert werden kann. Es soll dabei dem System sowohl die Information darüber bereitgestellt werden, an welcher Stelle das entsprechende Phänomen auftritt, als auch, nach welchen Regeln in der Zukunft Signalwechsel zu erwarten sind. Letztlich sollen die entsprechenden Informationen durch elektronische Steuergeräte im Fahrzeug möglichst zuverlässig und sinnvoll, gegebenenfalls auch vielfältig nutzbar sein.
Die vorliegende Erfindung bezieht sich zur Lösung der Aufgabe auf ein Verfahren zur Fahrassistenz bei einem Fahrzeug, bei dem die Bewegung des Fahrzeugs in Fahrtrichtung in Abhängigkeit von wenigstens einer auf dem Fahrweg vor dem Fahrzeug liegenden verkehrssteuernden Signalanlage mit zyklisch wiederkehrenden Signalzuständen beeinflussbar ist, und bei dem innerhalb des Fahrzeugs erste Daten betreffend die Position von der/den Signalanlage(n) zugeordneten Stopplinie(n) und zweite Daten betreffend die Anfangszeiten und/oder Endzeiten einzelner Signalzustände der Signalanlage(n) durch eine erste Datenverarbeitungsanlage (eHorizon) ermittelt und mittels einer Datenverbindung innerhalb des Fahrzeugs in Form von Datenpaketen (Meldungen) für elektronische Steuerungseinrichtungen bereitgestellt werden und wobei einzelne der Datenpakete wenigstens folgende Daten enthalten:
einen frühesten möglichen und /oder spätestens möglichen Zeitpunkt für den Wechsel einer Signalphase sowie einen wahrscheinlichsten Zeitpunkt des Wechsels einer Signalphase.

Grundsätzlich ist es bekannt, bei Verfahren zur Fahrassistenz die Bewegung des Fahrzeugs in Längsrichtung, d. h. in Fahrtrichtung, durch elektronische Steuerungseinrichtungen zu beeinflussen. Hierzu sind beispielsweise Systeme zur Steuerung der Geschwindigkeit, zur Steuerung der Übersetzung (Gänge) des Getriebes und zur Wahl der Antriebsart bei Hybridfahrzeugen, insbesondere auch zum Management der Rekuperation von Energie bekannt. Solche Systeme können einerseits zur Minimierung der verbrauchten Energie und zur Optimierung des Geschwindigkeitsprofils eingesetzt werden, jedoch können sie auch den Fahrkomfort und die Sicherheit optimieren. Es ist grundsätzlich auch bekannt (vgl. die zitierte WO-Schrift), Daten von einer Signalanlage, insbesondere einer Lichtsignalanlage (Ampel) in die Steuerung einzubeziehen. Jedoch ist bisher keine konkrete Umsetzung einer solchen Struktur in einen eHorizon bekannt.

Gemäß der vorliegenden Erfindung können die Daten, wie beispielsweise die Position der Stopplinie, an der das Fahrzeug voraussichtlich bei einem entsprechenden Signal der Signalanlage anhalten muss und die Phasenlage und Frequenz der Signalanlage elektronisch codiert und beispielsweise über einen im Fahrzeugbereich üblichen CAN-Bus bereitgestellt werden. Als besonders wichtig haben sich dabei die Daten/Informationen bezüglich eines frühestmöglichen oder spätestmöglichen Zeitpunkt für den Wechsel der Signalphase sowie für den wahrscheinlichsten Zeitpunkt des Wechsels der Signalphase herausgestellt. Diese Information kann beispielsweise auch so dargestellt werden, dass der wahrscheinlichste Zeitpunkt eines Wechsels der Signalphase angegeben wird sowie eine mögliche Abweichung hiervon in Bezug auf eine frühere und/oder spätere Umschaltung. Damit kann das Geschwindigkeitsprofil optimiert werden, ohne, dass bei Erreichen der Signalanlage eine Vollbremsung oder kurz vor Erreichen der Signalanlage eine maximale Beschleunigung notwendig wird, wenn die Signalanlage zum frühestmöglichen Zeitpunkt oder zum spätestmöglichen Zeitpunkt umschaltet.

Die Position der Stopp-Linie und die genannten Zeitangaben können in Form eines Offsets (= Abstands) von einer bekannten Anfangsposition und (bzgl. der Zeitangaben) gemäß einer absoluten Zeitangabe auf der Basis einer Systemzeit, z. B. GPS-Zeit übermittelt werden.

Die Daten können an das Fahrzeug bzw. an die erste Datenverarbeitungsanlage direkt durch die Signalanlage übermittelt werden. Die Daten können jedoch auch durch die Signalanlage zunächst an eine zentrale, ortsfeste Datenverarbeitungsanlage gesendet und dort gemeinsam mit anderen Daten für Fahrzeuge bereitgestellt werden.

Letztlich können die Daten durch die Signalanlage auch direkt einer nicht lokalisierten Datenverarbeitungsanlage in Form einer Cloud bereitgestellt werden, so dass die Daten dann auch von Fahrzeug zu Fahrzeug weitergegeben werden können. Innerhalb eines Fahrzeugs können diese Daten dann zunächst auf dem eHorizon, d. h. im Bereich der ersten Datenverarbeitungsanlage auch mit anderen Daten über die Fahrumgebung des jeweiligen Fahrzeugs, beispielsweise über Streckensteigungen oder Oberflächenbeschaffenheit der Fahrbahn abgeglichen werden. Beispielsweise entscheidet die Oberflächenbeschaffenheit zusammen mit der Steigung oder dem Gefälle der Fahrstrecke über mögliche Beschleunigungen und Abbremsungen. Die Entscheidung der elektronischen Steuereinrichtung aufgrund der vom eHorizon erhaltenen Daten hat einen Einfluss auf das Fahrverhalten des Fahrzeugs und kann gegebenenfalls auch an andere Fahrzeuge oder eine zentrale Datenbank gemeldet werden. Auch eine Meldung an die Signalanlage selbst ist denkbar. In diesem Fall kann auch die Signalanlage ihre Phase und/oder ihren Rhythmus an ein oder mehrere Fahrzeuge anpassen.

Eine vorteilhafte Ausgestaltung der Erfindung sieht vor, dass für den Fall einer dynamischen Regelung der Signalanlage wenigstens 2 Datenpakete (Meldungen) durch die erste Datenverarbeitungsanlage bereitgestellt werden, wobei das erste Datenpaket eine Information darüber enthält, dass ein zweites, mit dem ersten Datenpaket zusammenhängendes Datenpaket zur Verfügung steht.

Für Signalanlagen, beispielsweise Ampeln, die keine feste Schaltfrequenz haben sondern sich dynamisch an das Verkehrsaufkommen anpassen, ist eine Steuerung insofern kompliziert als nicht mit einer festen Steuerzeit gerechnet werden kann. In diesem Fall kann durch entsprechende Identifizierung der Meldungen/Datenpakete bei der Kommunikation zwischen dem eHorizon und einer elektronischen Steuerungseinrichtung innerhalb des Fahrzeugs mitgeteilt werden, dass zwei Meldungen/Datenpakete gesendet werden, die zusammenhängen. Üblicherweise werden die beiden Datenpakete nacheinander übermittelt, sie können sich jedoch auch aufgrund der paketorientierten Kommunikation zeitlich überschneiden.

Im Fall von zwei miteinander zusammenhängen Datenpaketen kann vorteilhaft vorgesehen sein, dass das jeweils erste Datenpaket eine Information darüber enthält, dass es Teil eines Paares von Datenpaketen ist sowie eine zweite Information darüber, dass es das erste der beiden Datenpakete ist.

Für den Fall, dass die Signalanlage nicht dynamisch gesteuert ist, genügt eine einzige Meldung und diese enthält auch die Information, dass keine weitere Meldung folgt.

Es kann vorteilhaft vorgesehen sein, dass das zweite Datenpaket Informationen über den wahrscheinlichsten Zeitpunkt eines zukünftigen Signalzustandswechsels enthält.

Es ist zudem vorteilhaft vorgesehen, dass das zweite Datenpaket Informationen über einen frühesten und/oder einen spätesten möglichen Zeitpunkt eines zukünftigen Signalzustandswechsels enthält.

Das erste Datenpaket kann beispielsweise in einer absoluten Zeitangabe auf der Grundlage einer im Fahrzeug geltenden Zeitbasis die Information enthalten, wann der Start der nächsten Freifahrtphase der Signalanlage beginnt. Zudem kann das erste Datenpaket eine Information darüber enthalten, wie lange eine Freifahrtphase standardmäßig dauert sowie vorteilhaft zusätzlich, wie lange eine Nichtfreifahrtphase standardmäßig andauert.

Mit einer Freifahrtphase kann beispielsweise die Grünphase einer Ampel verstanden werden, während unter der Nichtfreifahrtphase die Summe der Gelbphase und der Rotphase verstanden wird, d. h. der gesamte Zeitraum, in dem die Signalanlage nach den geltenden Vorschriften nicht überfahren werden soll/darf.

Eine vorteilhafte Ausgestaltung der Erfindung sieht zudem vor, dass das zweite Datenpaket eine Information über den frühesten möglichen Zeitpunkt des Beginns einer Freifahrtphase (Grünphase) der Signalanlage, eine Information über das spätest mögliche Ende derselben Freifahrphase sowie wenigstens eine Information über einen wahrscheinlichsten Zeitpunkt des Beginns und/oder des Endes der Freifahrtphase enthält.

Um der elektronischen Steuerungseinrichtung eine Orientierung darüber zu ermöglichen, welches von den beiden Datenpaketen das erste und welches das zweite ist, enthält üblicherweise nicht nur das erste Datenpaket eine Angabe darüber, dass es mit einem zweiten Datenpaket zusammenhängt, sondern auch das zweite Datenpaket enthält einen Hinweise darauf, dass es zweites Datenpaket eines Paares von Datenpaketen ist.

Dies kann beispielsweise im Rahmen eines ADASIS-Standards dadurch geschehen, dass beide Datenpakete demselben Meldungstyp angehören und dass jedoch unterschiedliche Profiltypen angegeben werden und im Inhaltsteil des ersten Datenpakets ein Statusbit vorgesehen ist, dass angibt, ob die Signalanlage gemäß einer festen Zeiteinteilung oder einer dynamischen Zeiteinteilung funktioniert.

Eine weitere vorteilhafte Ausgestaltung der Erfindung kann vorsehen, dass für den Fall einer Signalanlage mit fest vorgegebenem Zeitschema ein Datenpaket Informationen über den derzeitigen Signalzustand, den frühesten möglichen Zeitpunkt zum Umschalten des Signalzustandes, und das Intervall zwischen dem frühesten möglichen Zeitpunkt zum Umschalten und dem spätesten möglichen Zeitpunkt zum Umschalten enthält.

In diesem Fall muss nicht mit einem dynamischen Verhalten der Signalanlage, d. h. der Verlängerung von einzelnen Signalphasen je nach Verkehrsaufkommen, gerechnet werden. Jedoch können dennoch Unsicherheiten durch Unschärfe des Verhaltens der Signalanlage selbst oder durch Ungenauigkeit der erfassten Parameter der Signalanlage oder Ungenauigkeit bei der Bestimmung der Position des Kraftfahrzeugs gerechnet werden. Ausgehend von diesen Unsicherheiten ist es vorteilhaft, einen frühestmöglichen Zeitpunkt zum Umschalten des Signalzustands und die Dauer des nächsten Signalzustands zu übermitteln und beim Erstellen einer Planung für das Fahrzeug zu berücksichtigen.

Die genannten Verfahrensvarianten können innerhalb eines Fahrzeugs, das mit einem eHorizon ausgestattet ist, besonders einfach durch die Übermittlung nach dem ADASIS v 2- Standard codiert werden.

Innerhalb eines Fahrzeugs kann die Kommunikation zwischen dem eHorizon und den elektronischen Steuerungseinrichtungen besonders einfach über einen digitalen Datenbus, insbesondere einen CAN-Bus übermittelt werden.

Im Folgenden wird die Erfindung anhand von Figuren einer Zeichnung an Beispielen gezeigt und erläutert.

Dabei zeigt:
- Fig. 1: schematisch die Darstellung einer Fahrstrecke von oben mit einem Fahrzeug und einer Signalanlage,
- Fig. 2: schematisch eine Fahrstrecke mit möglichen Abzweigungen,
- Fig. 3: ein Fahrzeug schematisch mit einer Datenverarbeitungseinrichtung für einen eHorizon sowie eine Signalanlage, die mit dem Fahrzeug mittels einer Funkverbindung verbunden ist,
- Fig. 4: ein Zeitschema einer Signalanlage, wobei der Zeitpunkt des nächsten Umschaltens nur ungefähr bekannt ist,
- Fig. 5: ein Zeitschema einer Signalanlage mit festen Signalwechselzeiten,
- Fig. 6: ein Zeitschema einer Signalanlage, die ihre Signalwechselzeiten dynamisch ändern kann,
- Fig. 7: die Darstellung zweier zusammenhängender Datenpakete, die über einen CAN-Bus innerhalb eines Fahrzeug zur Verfügung gestellt werden, sowie
- Fig. 8: die Darstellung eines Datenpaketes für den Fall, dass nur die Zeit zum nächsten Umschalten (Restgrün bzw. -rot) bekannt ist, aber nicht die Periodenlänge.

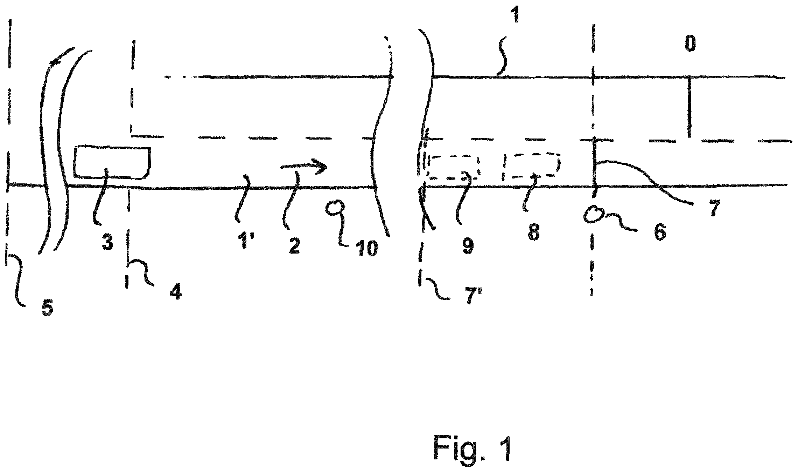

Die Fig. 1 zeigt von oben gesehen eine Straße 1 mit einer Fahrbahn 1', die von Fahrzeugen in Richtung des Pfeils 2 befahren wird. Das Fahrzeug mit einer Fahrassistenzeinrichtung ist mit 3 bezeichnet und befindet sich an der Position 4. Die Position 4 ist durch den Abstand (= Offset) von der Nulllinie 5 bestimmt.

An der Fahrbahn 1' ist eine Signalanlage 6 in Form einer Ampel angeordnet. Dieser ist eine Stopplinie 7 zugeordnet, an der das Fahrzeug 3 üblicherweise stehen bleibt, wenn die Signalanlage rot oder gelb oder ein anderes Stoppsignal signalisiert, während das Fahrzeug 3 die Stopplinie 7 passieren kann, wenn die Signalanlage 6 das Freifahrtsignal bzw. grün signalisiert.

Die Position der Stopplinie ist ebenfalls als Offset, gerechnet von der Nulllinie 5 im System repräsentiert. Die Stopplinie 7 kann auch vom System hinter das letzte Fahrzeug 9 einer Reihe von Fahrzeugen 8, 9 bewegt werden, die einen Stau vor der Stopplinie 7 der Signalanlage 6 bilden.

Ein Verkehrszeichen 10 ist an der Fahrbahn 1' ebenfalls eingezeichnet und muss beachtet, d. h. auch bei der Planung der Fahrt durch das Fahrassistenzsystem mit eingerechnet werden, wenn es beispielsweise eine Höchstgeschwindigkeit signalisiert.

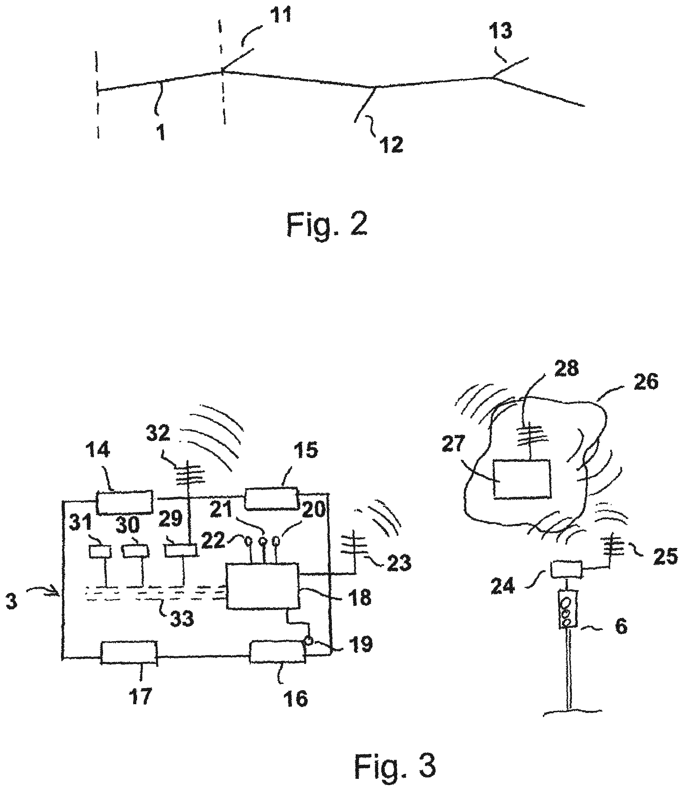

Während in der Fig. 1 lediglich die wahrscheinlichste Fahrstrecke (most probable path) linear dargestellt ist, ist in der Fig. 2 eine Fahrstrecke 1 mit möglichen Abzweigen 11, 12, 13 dargestellt. Wird zu Beginn der Fahrt oder zu einem Zeitpunkt vor Passieren einer Abzweigung 11, 12, 13 ein Fahrweg vom System gewählt oder dem System durch den Fahrer signalisiert, der an einer der Abzweigungen 11, 12, 13 die Fahrstrecke 1 verlässt, so beginnt an der jeweiligen Abzweigung ein neuer Pfad mit einer eigenen Identität und auch einer eigenen Bezeichnung im System, so dass verschiedene Fahrwege im System unterschieden werden können.

Die Fig. 3 zeigt schematisch den Aufbau eines Fahrassistenzsystems mit verschiedenen Komponenten. Zunächst ist das Fahrzeug schematisch dargestellt und mit 3 bezeichnet, wobei zur Illustration schematisch vier Räder 14, 15, 16, 17 eingezeichnet sind.

Das Fahrzeug 3 weist eine erste Datenverarbeitungsanlage (eHorizon) 18 auf, die als Mikrocomputer oder Mikrocontroller ausgeführt ist und die mit verschiedenen Sensoren 19, 20, 21, 22 ausgestattet bzw. verbunden ist. Mit 19 kann beispielsweise ein Rollsensor bezeichnet sein, zudem können ein Gyrosensor oder auch mehrere Gyrosensoren oder ein Geschwindigkeitssensor sowie weitere Sensoren vorgesehen sein.

Der eHorizon 18 ist zudem über eine Antenne 23 mit externen Komponenten verbunden. Beispielsweise kann eine Funkverbindung direkt mit einer Signalanlage 6 über einen Transceiver 24 sowie eine Antenne 25 der Signalanlage 6 bestehen. Diese Funkverbindung kann jedoch auch über eine zusätzliche Komponente 26 hergestellt sein, wobei diese Komponente 26 entweder einen ortsfesten Server 27 mit einer Antenne 28 enthalten kann und/oder als Cloud ausgebildet ist mit einer Vielzahl von intelligenten Einheiten, die in einem Kommunikationsnetz miteinander verbunden sind.

Die erste Datenverarbeitungsanlage 18 kann von der Signalanlage 6 Informationen über deren augenblicklichen Signalzustand sowie die Länge einzelner Signalintervalle und/oder die zeitliche Lage des nächsten Umschaltzeitpunkts, gemessen in einer Absolutzeitbasis empfangen. Diese Informationen können mithilfe einer absoluten Zeitbasis auf dem Fahrzeug, die sich beispielsweise an einer GPS-Zeit orientieren kann oder an einer anderen Normalzeit, einem absoluten Zeitpunkt zugeordnet werden. Dies hat zur Folge, dass etwaige Verzögerungen bei der Signalübermittlung praktisch keine Fehler in Bezug auf die Zeitangaben verursachen können.

Die Datenverarbeitungsanlage 18 kann somit in Verbindung mit einem Positionssensor, der die momentane Position des Fahrzeugs 3 feststellt, beispielsweise über eine Satellitensignalempfänger, Informationen darüber bereitstellen, wie der zukünftige Fahrweg aussieht und zu welchen Zeitpunkten das Fahrzeug an welchem Ort sein kann. Damit kann dem Fahrer oder weiteren Aggregaten auf dem Fahrzeug ein sogenannter eHorizon mit zusätzlichen Attributen über die zukünftige Fahrstrecke bereitgestellt werden, wobei die zusätzlichen Attribute über die reine Beschreibung der Fahrstrecke hinausgehen und beispielsweise Auskunft über Streckensteigungen, Quergefälle und Fahrbahnbeschaffenheit sowie Geschwindigkeitsbeschränkungen und gegebenenfalls besondere Singularitäten der Fahrstrecke geben können. Damit können mittels dieser bereitgestellten Daten des eHorizon verschiedene elektronische Steuergeräte 29, 30, 31 im Fahrzeug die Längsbewegung des Fahrzeugs 3 vorausplanen. Ist beispielsweise die Position des Fahrzeugs und die Position der Stopplinie 7 einer Signalanlage 6 sowie das Schaltschema der Signalanlage bekannt, so kann innerhalb des Fahrzeugs 3 durch die Steuereinrichtung 29 eine "grüne Welle"-Geschwindigkeit gewählt werden, mit der das Fahrzeug während einer Grünphase ohne weitere Abbremsungen oder Beschleunigungen die Stopplinie 7 passieren kann.

Eine solche Geschwindigkeit kann von dem Steuergerät 29 auch mittels Funkverbindung und Antenne 32 unmittelbar an andere Verkehrsteilnehmer oder an die Signalanlage 6 gemeldet werden.

Die Steuereinrichtung 29 kann beispielsweise die Geschwindigkeit des Fahrzeugs planen und einen Einfluss auf Beschleunigung und Abbremsung nehmen, bei einem Hybridfahrzeug beispielsweise auch das Rekuperationsverhalten steuern, eine Gangschaltung/Getriebeübersetzung steuern oder beeinflussen oder alle anderen Größen, die mit der Längsbewegung des Fahrzeugs zusammenhängen. Dies ist besonders sinnvoll im Fall eines automatisierten Fahrens.

Damit die elektronischen Steuereinrichtungen 29, 30, 31, die mit dem eHorizon 18 mittels eines digitalen Datenbusses 33 in Form eines CAN-Busses verbunden sind, die Daten optimal verarbeiten können, werden diese in einer besonderen digitalen Darstellungsform gemäß dem ADASIS v 2- Protokoll über den CAN-Bus 33 im Fahrzeug verbreitet. Das ADASIS v 2-Protokoll ist seiner Struktur nach besonders geeignet, eine lineare wahrscheinlichste zukünftige Fahrstrecke mit eventuellen Abzweigungen zu beschreiben sowie die im Rahmen einer solchen linearen Fahrstrecke auftretenden Besonderheiten. Damit wird die zu bearbeitende und übermittelnde Datenmenge gegenüber einer älteren Standardversion, die eher flächenorientiert ist und Daten eines Territoriums widerspiegelt, erheblich reduziert.

Innerhalb des ADASIS v 2-Protokolls sind verschiedene Meldungen/'Datenpakete (= Messages) definiert, die jeweils bestimmte Besonderheiten der zukünftigen Fahrstrecke signalisieren. Zudem sind auch Meldungsarten in Form einer Profilmeldung zulässig, über die am einfachsten Veränderungsprofile bestimmter Attribute über die Fahrstrecke mitgeteilt werden können.

Im Rahmen der vorliegenden Erfindung werden Meldungen beschrieben, die die Position und das zeitliche Verhalten von Signalanlagen, insbesondere Ampeln, in möglichst effizienter Form beschreiben.

Zunächst soll in diesem Zusammenhang die Meldung beschrieben werden, die den Zustand beschreibt, bei dem die Position der Signalanlage sowie der aktuelle Signalzustand und näherungsweise die Zeit bis zur nächsten Umschaltung bekannt sind. Optional kann auch eine Abschätzung der Zeitspanne mit dargestellt werden, die normalerweise ein einzelner Schaltzustand andauert.

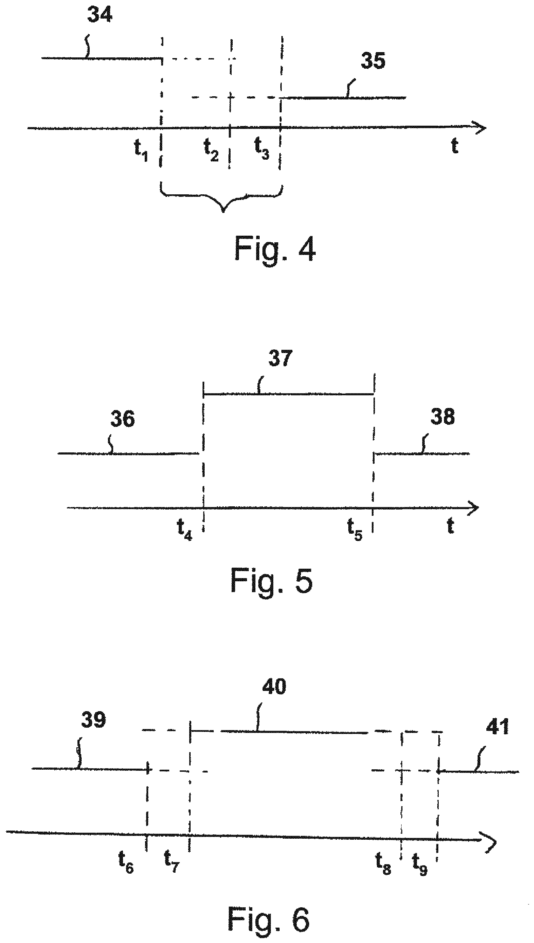

Die Fig. 4 stellt hierzu in einem Diagramm horizontal den Verlauf der Zeit t dar, wobei bestimmte Signalzustände durch durchgezogene oder gestrichelte horizontale Linien dargestellt sind.

Die Linie 34 zeigt einen Signalzustand der Signalanlage, der zum Zeitpunkt der Erfassung grün ist und das Freifahrtsignal bedeutet. Es ist im Rahmen der Meldung sicher, dass dieser Signalzustand 34 bis zum Zeitpunkt t1 andauert. t1 stellt somit die früheste Umschaltzeit (minTimeToChange) dar. Der Zeitpunkt t3 stellt den spätesten Zeitpunkt des Signalwechsels (maxTimeToChange) dar, wobei der neue Signalzustand mit 35 (Rot = Sperrung) bezeichnet ist. Mit t2 ist ein wahrscheinlichster Zeitpunkt eines Wechsels des Signalzustands bezeichnet. Dieser in der Fig. 4 dargestellte Zustand kann in einer Meldung in digitaler Form dargestellt werden, wobei die Meldung gemäß einem Protokoll einem Datenpaket mit 64 bit entspricht. Festgelegte Abschnitte des Protokolls signalisieren beispielsweise den Meldungstyp (im vorliegenden Fall Typ = 5), den Profiltyp (im vorliegenden Fall = 16), die Zahl der Sendewiederholungen (im vorliegenden Fall = 1, d. h. 0-te Wiederholung), die Nummer des Pfades, an dem die Signalanlage angeordnet ist sowie den Offset, d. h. die Position der Stopplinie der Signalanlage als Abstand von der Nulllinie 5 gemäß Fig. 1. Zudem sind für den Signalzustand der Signalanlage Informationen über den derzeitigen Signalzustand (CurrentColour-Länge = 3 bit) die minimale Zeit bis zum Signalwechsel (minTimeToChange, 10 bit) sowie die Intervallzeit zwischen dem frühesten und dem spätesten Datum des Signalwechsels enthalten (5 bit Länge) sowie der Zeitpunkt des wahrscheinlichsten Signalwechsels (5 Bit Länge) . Zudem ist eine Information über die Zuverlässigkeit (Confidence) der Meldung mit einer Bitlänge von 4 bit vorgesehen sowie die ermittelte Richtgeschwindigkeit, die zum Passieren der Stopplinie bei Grün führt (GreenWaveSpeed, 5 bit) . Die letztgenannte Information über die Geschwindigkeit der grünen Welle ist optional und wird gegebenenfalls auch vom Betreiber der Lichtsignalanlage bzw. den Verkehrsmanagementsystem bereitgestellt. Sie kann jedoch auch durch den eHorizon oder ein nachgeordnetes Aggregat im Fahrzeug ermittelt werden.

Die genauere Aufteilung der Informationseinheiten innerhalb einer Meldung im Rahmen des Protokolls ist der Tabelle 1 am Ende des Textes zu entnehmen.

Der zweite, anhand der Fig. 5 und 6 zu betrachtende Fall bezieht sich darauf, dass die Signalphasen der Signalanlage der Datenverarbeitungseinrichtung im Fahrzeug bekannt sind. Dies bedeutet, dass die Dauer der einzelnen Phasen (Freifahrtphase und Sperrphase, Grün- bzw. Nichtgrünphase) bekannt sind. Jedoch wird angenommen, dass die Signalanlage auf das gegenwärtige Verkehrsaufkommen dynamisch durch Verlängerung einer Phase auf Kosten einer anderen Phase reagieren kann.

Die augenblicklich geltenden Größen, die in den Fig. 4 bis 6 dargestellt sind, können als Information über die Signalanlage über eine direkte Kommunikation zwischen dem Fahrzeug und der Signalanlage selbst oder über einen Backendserver übermittelt werden.

Die Fig. 5 stellt den Fall dar, dass die Signalanlage zu unveränderten Zeiten schaltet. In diesem Fall ist beispielsweise eine Rotphase in der Fig. 5 mit 36 bezeichnet. Sie dauert bis zum Zeitpunkt t4. Zum Zeitpunkt t4 findet eine Umschaltung in die Grünphase (Freifahrtphase) 37 statt. Diese dauert eine Zeit t₅ minus t₄ an bis zum Zeitpunkt t5. Zum Zeitpunkt t5 schaltet die Signalanlage wieder auf Rot in den Schaltzustand 38. Einfachheitshalber wird hier eine evtl. existierende Gelbphase als Teil der Sperrphase im roten Linienstück mit berücksichtigt.

Die entsprechende Meldung ist dem Aufbau nach dem ersten Teil der Tabelle 2 am Ende des Textes zu entnehmen. Es ist ein Abschnitt der Meldung vorgesehen, der die Art der Meldung bezeichnet (hier: 5) sowie ein Profiltyp (hier: 17 bzw. 18). Es ist zudem eine Information über die laufende Nummer der Übermittlung (CyclicCount) vorgesehen.

Die Meldung enthält zudem die Identität der Fahrstrecke, auf der die Stopplinie der Signalanlage vorgesehen ist sowie einen Offset = Abstand der Stopplinie von der Nulllinie.

Das dynamische Verhalten der Signalanlage wird durch eine erste Information (Control Status, 1 bit) über das Verhalten der Signalanlage, nämlich einerseits eine feste Zeiteinteilung der Umschaltzeiten (0) oder andererseits eine dynamische Einteilung (1) beschrieben. Zudem enthält die Meldung die Information, wann die nächste Freifahrtphase beginnt (17 bit absolute Zeitbasis) . Es ist außerdem ein Abschnitt von 7 bit vorgesehen, der die Dauer der Grünphase beschreibt und ein weiterer Abschnitt von 7 bit Länge, der die Dauer der Nichtgrünphase = Sperrphase beschreibt.

Handelt es sich bei der Signalanlage um eine solche, die keine dynamische Regelung beherrscht oder die momentan mit einer festen Zeiteinteilung der Schaltphasen betrieben wird, so wird innerhalb der Meldung mitgeteilt, dass die Signalanlage keinen dynamischen Betrieb aufweist (Control Status = 0) und die entsprechende Meldung wird bereitgestellt, ohne dass es hierzu eine weitere Meldung gibt.

Enthält die erste Meldung eine Information darüber, dass die Signalanlage einem dynamischen Betrieb folgt, so wird die erste Meldung entsprechend codiert (Control Status = 1) und es folgt eine zweite Meldung, die im Folgenden beschrieben ist: Die zweite Meldung enthält die Bezeichnung eines Meldungstyps (im vorliegenden Fall Typ = 5), eines Profiltyps (im vorliegenden Fall = 18 im Unterschied zu dem der ersten Meldung), die laufende Nummer der Meldung, die Bezeichnung der Fahrstrecke, auf der die Stopplinie der Signalanlage liegt sowie den Offset der Stopplinie. Optional kann in der zweiten Meldung statt des Offset der Stopplinie der Offset eines evtl. vorhanden Rückstaus vor der Stopplinie angegeben werden, falls die Rückstauinformation im Fahrzeug bekannt ist. Zudem enthält die Meldung Informationen über den wahrscheinlichsten Start-Zeitpunkt der nächsten Grünphase (7 bit), den wahrscheinlichsten Endzeitpunkt der nächsten Grünphase (7 bit), den frühestmöglichen Zeitpunkt der nächsten Grünphase (7 bit) sowie den spätestmöglichen Zeit des Endes der nächsten Grünphase. Zudem kann noch eine optionale Textinformation in der Meldung enthalten sein.

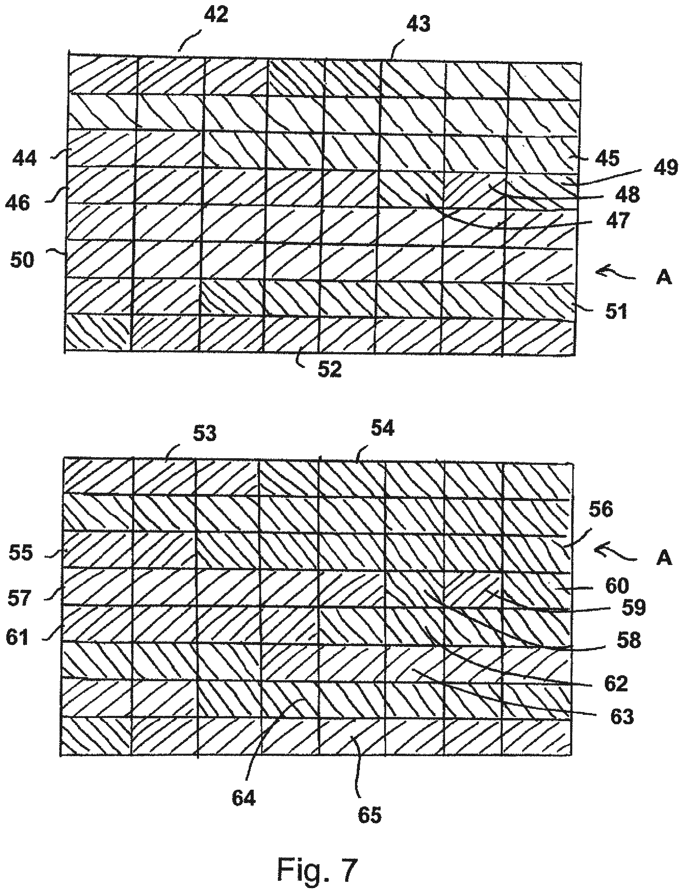

In der Fig. 7 ist eine mögliche Darstellung der digitalen Inhalte der beiden zuletzt beschriebenen aufeinanderfolgenden und zusammenhängenden Meldungen dargestellt. Dabei ist mit A die erste Meldung und mit B die zweite Meldung beschrieben. Entsprechend einer Ausgestaltung des CAN-Busses enthält eine einzelne Meldung ein Bitmuster von 64 bit. Das Muster, nachdem die 64 bit übermittelt werden, lässt verschiedene Übertragungsreihenfolgen zu. Darauf soll hier nicht näher eingegangen werden. Es wird nur beispielhaft eine Struktur und Aufeinanderfolge der entsprechenden digitalen Größen dargestellt. Dabei ist die Reihenfolge der Bits horizontal, beginnend von links oben nach rechts und weiter zeilenweise von links nach rechts zu lesen. Bei Wechsel von einer ersten dargestellten Größe zu einer zweiten Größe ändert sich jeweils die Schraffur. Demgemäß beginnt die erste Meldung A mit einer Einheit 42 von 3 bit Länge, die den Meldungstyp bezeichnet. Es folgt eine Einheit von 13 bit Länge, die den Offset/die Position der Stopplinie beschreibt. Darauf folgt eine Einheit 44 von 2 bit Länge, die die Nummerierung Cyclic count) der Meldung darstellt. Hierauf folgt eine vierte Einheit 45 von 6 bit Länge, die die Identität des betrachteten Fahrwegs (Path index) beschreibt, auf der sich die Stopplinie befindet. Darauf folgt eine fünfte Einheit 46 von 5 bit Länge, die einen Profiltyp beschreibt. Darauf folgen eine sechste Einheit 47, die ein Kontrollbit enthält, eine siebte Einheit 48 sowie eine achte Einheit 49, die eine Information über die Aktualisierung der Meldung enthält.

Hierauf folgt eine Einheit 50 von 18 bit Länge, die die Startzeit der nächsten Grünphase (Next Start Green) bezeichnet. Auf diese folgt eine Einheit 51 von 7 bit Länge, die die Länge der Grünphase (GreenPhase) beschreibt und auf diese folgt eine weitere Einheit 52 der Länge 7 bit, die die Dauer der Rot/Gelbphase (Nichtgrünphase) beschreibt (NoGreen Phase).

In dem Fall, in dem eine zweite Meldung auf die erste Meldung folgt, weil eine dynamische Regelung der Lichtsignalanlage möglich ist, enthält diese zweite Meldung gemäß Fig. 6 zunächst eine Information über den Zeitpunkt t6 des frühestmöglichen Starts der Grünphase sowie eine Information über den Zeitpunkt t7 des wahrscheinlichsten Starts der Grünphase 40. In der Fig. 6 ist die Rotphase mit 39 bezeichnet, die darauf folgende Grünphase mit 40 und die auf diese folgende Rotphase mit 41.

Die Meldung enthält zudem Informationen über den spätestmöglichen Wechsel von der Grünphase 40 zur Rotphase 41, der mit t9 bezeichnet ist sowie über den Zeitpunkt des wahrscheinlichsten Wechsels zwischen der Grünphase 40 und der Rotphase 41, der mit t8 bezeichnet ist. Für die entsprechenden Zeitpunkte sind jeweils 7 bit in der Meldung vorgesehen. Die Struktur der Meldung ist genauer dem zweiten Teil der Tabelle 2 zu entnehmen.

Die Fig. 7 enthält wiederum eine Darstellung der entsprechenden Informationen in einer Meldung entsprechend den Vorgaben des CAN-Busses. Dort ist mit 53 eine 3 bit lange Einheit über den Typ der Meldung vorgesehen, eine Einheit 54 der Länge 13 bit folgt hierauf und beschreibt die Position der Stopplinie oder des Stauendes. Als Nächstes ist eine Einheit 55 der Länge von 2 bit vorgesehen zur Bezeichnung der Durchnummerierung der Meldung (Cyclic count). Darauf folgt eine Einheit 56 (Path index), die die Fahrstrecke identifiziert, auf der die Stopplinie liegt. Auf diese folgt eine Einheit 57 von 5 bit Länge, die einen Profiltyp bezeichnet. Auf diese folgen die Einheiten 58, 59, 60 von jeweils 1 bit Länge, die Kontrollbits bzw. 1 bit die Anzahl von Wiederholungen bei der Sendung der entsprechenden Meldung oder die Aktualisierung der Meldung enthalten. Hierauf folgt die Einheit 61, die 4 bit Lang ist und eine zusätzliche Textinformation enthalten kann. Darauf folgt die Einheit 62, die den wahrscheinlichsten Zeitpunkt des Starts der Grünphase bezeichnet und auf diese die Einheit 63, die den wahrscheinlichsten Zeitpunkt des Endes der Grünphase bezeichnet. Mit 64 ist eine 7 bit lange Einheit bezeichnet, die den frühesten Zeitpunkt des Starts der Grünphase bezeichnet und auf diese folgt eine letzte, 7 bit lange Einheit 65, die den letztmöglichen Zeitpunkt des Endes der Grünphase bezeichnet.

In der dargestellten und beschriebenen Form lässt sich der Signalzustand und das Verhalten einer Signalanlage, die an einem zukünftigen Fahrweg liegen, in effizienter Weise durch einen eHorizon bzw. eine entsprechenden Datenverarbeitungsanlage in einem Fahrzeug derart darstellen, dass elektronische Steuergeräte im Fahrzeug hierauf eine Planung von Fahrassistenzmaßnahmen optimal aufbauen können.

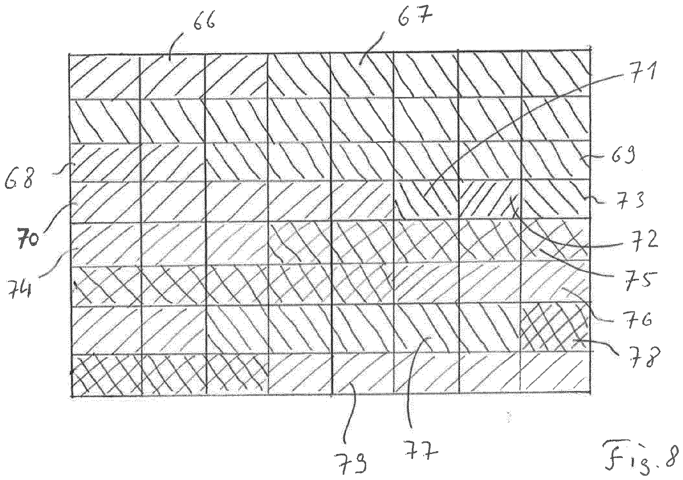

Fig. 8 zeigt ist eine mögliche Darstellung der digitalen Inhalte der Meldung, die eine vorausliegende Signalanlage beschreibt, für die nur die Zeit zum nächsten Umschalten (Restgrün bzw. -rot) bekannt ist, aber nicht die Periodenlänge. Entsprechend der oben genannten Ausgestaltung des CAN-Busses enthält eine derartige Meldung ein Bitmuster von 64 Bit, wobei die Aufteilung der Bits im Folgenden beschrieben ist:
Zunächst wird eine Einheit 66 von 3 Bit übersandt, die die Art der Meldung (hier =5) bezeichnen. Darauf folgt ein Feld 67 von 13 Bit Länge für den Offset. Darauf werden 2 Bit 68 übermittelt, die den "cyclic count" bezeichnen (hier =1) Darauf folgt die Identität des Fahrweges (Path index, 69) mit einer Auflösung von 6 Bit. Hierauf folgt, bezeichnet mit 70, der Profiltyp (hier: Typ 16) mit einer Länge von 5 Bit. Auf den Profiltyp folgt ein Kontrollbit 71, ein Bit 72, das eine Mehrfachübermittlung bezeichnet, sowie ein Bit 73, das einen Updatestatus übermittelt. Darauf folgt ein Feld 74 von 3 Bit Länge, das den derzeitigen Signalzustand (current color) bezeichnet, sowie ein Feld 75 von 10 Bit Länge, das das Mindestzeitintervall bis zum nächsten Signalwechsel bezeichnet. Hierauf folgen 5 Bit 76, die das "Interval time to change" (=Zeitintervall zwischen der MinTimeToChange und der MaxTimeToChange) bezeichnen. Mit 77 ist das folgende Feld von 5 Bit Länge bezeichnet, das das wahrscheinlichste Zeitintervall bis zum nächsten Signalwechsel bedeutet. Das folgende Feld 78 mit 4 Bit Länge bezeichnet den Vertrauensgrad (confidence), der der Meldung zugemessen wird. Das letzte Feld 79 mit 5 Bit Länge bezeichnet schließlich die Geschwindigkeit, bei der eine "Grüne Welle" erreicht wird. Diese kann von einem Verkehrsleitsystem geliefert werden.

**Tabelle 1**

| Head | | |
|---|---|---|
| • MsgType | = 5 | |
| • ProfileType | = 16 | |
| • CyclicCount | = 1 | |
| • Path index | ID vom Path, auf dem die Stopplinie steht | |
| • Offset | Position der Stoppline als Offset zum Start des Path | |

| Payload | | |
|---|---|---|
| • CurrecntColor | 3 bit; | 0-7 für Grün, Rot, Gelb Gelb-Blinker, Rot+GrünPfeile Rechts, Rot+GrünPfeileLinks, dunkel(grün) und nicht verfügbar |
| • MinTimeToChange | 10 bit; | Auflösung 0,1 sec; 0-1021; 1022 für alle größeren Werte; 1023 für nicht verfügbar; Die früheste Zeit zum nächsten Umschalten |
| • IntvalTimeToChange | 5 bit; | Auflösung 0,1 sec; 0-29; 30 für alle größeren Werte; 31 für nicht verfügbar; Das Zeitintervall zwischen der MinTimeToChange und der MaxTimeToChange |
| • LikelyTimeToChange | 5 bit; | Auflösung 0,1 sec; 0-29; 30 für alle größeren Werte; 31 für nicht verfügbar; Die abgeschätzte genauere Zeit im Intervall |
| • Confidence | 4 bit; | 0-15; für die Wahrscheinlichkeit der LikelyTimeToChange; Der Wert 15 bedeutet 100 % |
| • GreenWaveSpeed | 5 bit; | 0-30 m/sec, entspricht 0-108 km/h; 31 für nicht verfügbar, Richtgeschwindigkeit, um auf der grünen Welle zu bleiben. |

**Tabelle 2**

| 1. Message | | |
|---|---|---|
| Head | | |
| • MessageType | = 5 | |
| • ProfileType | = 17 | |
| • CyclicCount | = 1 | |
| • Path index | ID vom Path, auf dem die Stopplinie steht | |
| • Offset | Position der Stopplinie als Offset zum Start des Path | |

| Payload | | |
|---|---|---|
| • ControlStatus | 1 bit; | 0 = Feste Zeit; 1 = Dynamische Zeit |
| • NextStartGreen | 17 bit; | Start der nächsten Grünphase als µabsolute Zeit Mode 24, Auflösung 1 sec; |
| • GreenPhase | 7 bit; | 0-12 sec; Dauer der Grünphase, 126 für Werte ≥ 126; 127 für nicht verfügbar |
| • NoGreenPhase | 7 bit; | 0-125 sec; Dauer der Nichtgrünphase; 126 für Werte ≥ 126; 127 für nicht verfügbar |

| 2. Message (nur generiert, wenn die Signalphasen nicht fest sind) | | |
|---|---|---|
| Head | | |
| • MessageType | = 5 | |
| • ProfileType | = 18 | |
| • CyclicCount | = 1 | |
| • Path index | ID vom Path, auf dem die Stopplinie steht | |
| • Offset | Position des Rückstauendes* als Offset zum Start des Path | |

| Payload | | |
|---|---|---|
| • SignalDirection | 4 bit; | (Optionale zusätzliche Textfunktion) |
| • MostLikelyStart | 7 bit; | Delta von NextStartGreen; Auflösung 0,1 sec; |
| • MostLikelyEnd | 7 bit; | Delta nach NextStartGreen; Auflösung 0,1 sec; |
| • EarliestStart | 7 bit; | Delta vor NextStartGreen; Auflösung 0,1 sec; |
| • LatestEnd | 7 bit; | Delta nach NextStartGreen; Auflösung 0,1 sec; |

| | | |
|---|---|---|
| **Nur wenn ein Rückstauende abgeschätzt wird, ansonsten wird die Position der Stopplinie genommen. Der Rückstau kann per Definition nur so lang sein, bis der Start des Path oder eine andere Stopplinie erreicht wird.* | | |

## Patentansprüche

1. Verfahren zur Fahrassistenz bei einem Fahrzeug (3), bei dem die Bewegung des Fahrzeugs in Fahrtrichtung (2) in Abhängigkeit von einer auf dem Fahrweg (1, 1') vor dem Fahrzeug liegenden verkehrssteuernden Signalanlage (6) mit dynamisch an den Verkehr angepassten, wiederkehrenden Signalzuständen (34, 35, 36, 37, 38, 39, 40, 41) beeinflussbar ist, und bei dem innerhalb des Fahrzeugs erste Daten betreffend eine Position einer der Signalanlage (6) zugeordneten Stopplinie (7, 7') und zweite Daten betreffend eine Anfangszeit und/oder eine Endzeit einzelner Signalzustände der Signalanlage durch eine erste Datenverarbeitungsanlage (18) ermittelt und mittels einer Datenverbindung innerhalb des Fahrzeugs in Form von Datenpaketen (A, B) für elektronische Steuerungseinrichtungen (29, 30, 31) bereitgestellt werden, **dadurch gekennzeichnet, dass** folgende Daten übertragen werden:
- ein frühestmöglicher und/oder ein spätestmöglicher Zeitpunkt für einen Wechsel eines Signalzustands der Signalanlage, sowie
- ein wahrscheinlicher Zeitpunkt des Wechsels des Signalzustands der Signalanlage.

2. Verfahren nach Anspruch 1 **dadurch gekennzeichnet, dass** für den Fall einer dynamischen Regelung der Signalanlage (6) wenigstens ein erstes und ein zweites Datenpaket (A, B) durch die erste Datenverarbeitungsanlage (18) bereitgestellt werden, wobei das erste Datenpaket (A) eine Information darüber enthält, dass ein zweites, mit dem ersten Datenpaket zusammenhängendes Datenpaket (B) zur Verfügung steht.

3. Verfahren nach Anspruch 2, **dadurch gekennzeichnet, dass** das zweite Datenpaket (B) Informationen über den wahrscheinlichsten Zeitpunkt eines zukünftigen Signalzustandswechsels und/oder Informationen über einen frühesten und/oder einen spätesten möglichen Zeitpunkt eines zukünftigen Signalzustandswechsels enthält.

4. Verfahren nach einem der vorhergehenden Ansprüche, **dadurch gekennzeichnet, dass** für den Fall einer Signalanlage (6) mit fest vorgegebenem Zeitschema ein Datenpaket Informationen über den derzeitigen Signalzustand, den frühesten möglichen Zeitpunkt zum Umschalten des Signalzustandes, und das Intervall zwischen dem frühesten möglichen Zeitpunkt zum Umschalten und dem spätesten möglichen Zeitpunkt zum Umschalten enthält.

5. Verfahren nach Anspruch 4, **dadurch gekennzeichnet, dass** das Datenpaket Informationen über den wahrscheinlichsten Zeitpunkt zum Umschalten des Signalzustandes enthält.

6. Verfahren nach einem der vorhergehenden Ansprüche, **dadurch gekennzeichnet, dass** die Datenpakete nach dem ADASIS v2-Standard codiert werden.

7. Verfahren nach einem der vorhergehenden Ansprüche, **dadurch gekennzeichnet, dass** die Daten innerhalb des Fahrzeugs über einen digitalen Datenbus, insbesondere einen CAN-Bus übermittelt werden.

8. Datenstruktur zur Übermittlung von Signalzuständen einer verkehrssteuernden Signalanlage, welche wiederkehrende Signalzustände dynamisch an den Verkehr anpasst, die in einem Verfahren gemäß einem der Ansprüche 1 bis 7 benützt wird, wobei die Datenstruktur eine erste Nachricht umfasst, die in einem Kopfteil mindestens eine Identifikation der Signalanlage enthält, **dadurch gekennzeichnet, dass** die erste Nachricht in einem Nutzlastteil mindestens eine Information über einen frühestmöglichen und/oder einen spätestmöglichen Wechselzeitpunkt des Signalzustands der Signalanlage sowie eine Information über einen wahrscheinlichen Wechselzeitpunkt enthält.

9. Datenstruktur nach Anspruch 8, d a **durch gekennzeichnet**, dass die erste Nachricht als Zusatznachricht zu einer vorhergehenden zweiten Nachricht gesendet wird, wobei die vorhergehende zweite Nachricht einen Indikator enthält der anzeigt, ob die Wechselzeitpunkte der Signalanlage nach festgelegten Zeiten oder dynamisch gesteuert sind, und wobei die erste Nachricht nur gesendet wird, wenn der Indikator anzeigt, dass die Wechselzeitpunkte dynamisch gesteuert sind.

## Claims

1. Driving assistance method in a vehicle (3), in which the movement of the vehicle in the direction of travel (2) can be influenced on the basis of a traffic-controlling signal system (6) which is in front of the vehicle on the road (1, 1') and has recurring signal states (34, 35, 36, 37, 38, 39, 40, 41) dynamically adapted to the traffic, and in which first data relating to a position of a stop line (7, 7') assigned to the signal system (6) and second data relating to a start time and/or an end time of individual signal states of the signal system are determined inside the vehicle by means of a first data processing system (18) and are provided for electronic control devices (29, 30, 31) in the form of data packets (A, B) by means of a data connection inside the vehicle, **characterized in that** the following data are transmitted:
- an earliest possible and/or a latest possible time for a change of a signal state of the signal system, and
- a likely time of the change of the signal state of the signal system.

2. Method according to Claim 1, **characterized in that**, for the case of dynamic regulation of the signal system (6), at least one first data packet and one second data packet (A, B) are provided by the first data processing system (18), the first data packet (A) containing an item of information stating that a second data packet (B) connected to the first data packet is available.

3. Method according to Claim 2, **characterized in that** the second data packet (B) contains information relating to the most likely time of a future signal state change and/or information relating to an earliest possible and/or a latest possible time of a future signal state change.

4. Method according to one of the preceding claims, **characterized in that**, for the case of a signal system (6) with a firmly predefined timing scheme, a data packet contains information relating to the current signal state, the earliest possible time for changing over the signal state and the interval between the earliest possible time for changing over the signal state and the latest possible time for changing over the signal state.

5. Method according to Claim 4, **characterized in that** the data packet contains information relating to the most likely time for changing over the signal state.

6. Method according to one of the preceding claims, **characterized in that** the data packets are coded according to the ADASIS v2 standard.

7. Method according to one of the preceding claims, **characterized in that** the data are transmitted inside the vehicle via a digital data bus, in particular a CAN bus.

8. Data structure for transmitting signal states of a traffic-controlling signal system which dynamically adapts recurring signal states to the traffic and which is used in a method according to one of Claims 1 to 7, the data structure comprising a first message containing at least one identification of the signal system in a header, **characterized in that** the first message contains at least one item of information relating to an earliest possible and/or a latest possible changing time for the signal state of the signal system and an item of information relating to a likely changing time in a payload part.

9. Data structure according to Claim 8, **characterized in that** the first message is transmitted as an additional message to a preceding, second message, the preceding, second message containing an indicator which indicates whether the changing times of the signal system are controlled according to stipulated times or are controlled dynamically, and the first message being transmitted only if the indicator indicates that the changing times are controlled dynamically.

## Revendications

1. Procédé d'assistance au conducteur sur un véhicule (3), selon lequel le mouvement du véhicule dans le sens de la marche (2) peut être influencé en fonction d'un équipement de signalisation (6) contrôlant le trafic qui se trouve sur la route (1, 1') devant le véhicule, avec des états de signal (34, 35, 36, 37, 38, 39, 40, 41) dynamiques récurrents adapté au trafic, et selon lequel, à l'intérieur du véhicule, des premières données concernant une position d'une ligne d'arrêt (7, 7') associée à l'équipement de signalisation (6) et des deuxièmes données concernant un moment de début et/ou un moment de fin des états de signal individuels de l'équipement de signalisation sont déterminées par un premier équipement de traitement de données (18) et sont fournies sous la forme de paquets de données (A, B) à des dispositifs de commande électroniques (29, 30, 31) par le biais d'une liaison de données à l'intérieur du véhicule, **caractérisé en ce que** les données suivantes sont transmises :
- un moment le plus tôt possible et/ou le plus tard possible pour un changement d'un état de signal de l'équipement de signalisation, et
- un moment probable du changement de l'état de signal de l'équipement de signalisation.

2. Procédé selon la revendication 1, **caractérisé en ce que** dans le cas d'une régulation dynamique de l'équipement de signalisation (6), au moins un premier et un deuxième paquet de données (A, B) sont fournis par le premier équipement de traitement de données (18), le premier paquet de données (A) contenant une information indiquant la disponibilité d'un deuxième paquet de données (B) contigu au premier paquet de données.

3. Procédé selon la revendication 2, **caractérisé en ce que** le deuxième paquet de données (B) contient des informations à propos d'un moment le plus probable d'un futur changement d'état de signal et/ou des informations à propos d'un moment le plus tôt possible et/ou le plus tard possible d'un futur changement d'état de signal.

4. Procédé selon l'une des revendications précédentes, **caractérisé en ce que** dans le cas d'un équipement de signalisation (6) ayant un schéma temporel prédéfini de manière fixe, un paquet de données contient des informations à propos de l'état de signal actuel, du moment le plus tôt possible pour la permutation de l'état de signal et de l'intervalle entre le moment le plus tôt possible pour la permutation et le moment le plus tard possible pour la permutation.

5. Procédé selon la revendication 4, **caractérisé en ce que** le paquet de données contient des informations à propos du moment le plus probable pour la permutation de l'état de signal.

6. Procédé selon l'une des revendications précédentes, **caractérisé en ce que** les paquets de données sont codés conformément à la norme ADASIS v2.

7. Procédé selon l'une des revendications précédentes, **caractérisé en ce que** les données à l'intérieur du véhicule sont communiquées par le biais d'un bus de données numérique, notamment un bus CAN.

8. Structure de données destinée à la communication d'états de signal d'un équipement de signalisation contrôlant le trafic, lequel adapte dynamiquement des états de signal récurrents au trafic, laquelle est utilisée dans un procédé selon l'une des revendications 1 à 7, la structure de données comprenant un premier message qui contient au moins une identification de l'équipement de signalisation dans une partie d'en-tête, **caractérisée en ce que** le premier message contient, dans une partie de charge utile, au moins une information à propos d'un moment de changement le plus tôt possible et/ou le plus tard possible de l'état de signal de l'équipement de signalisation ainsi qu'une information à propos d'un moment de changement probable.

9. Structure de données selon la revendication 8, **caractérisée en ce que** le premier message est envoyé en tant que message complémentaire d'un deuxième message précédent, le deuxième message précédent contenant un indicateur qui indique si les moments de changement de l'équipement de signalisation sont commandés d'après des temps fixés ou de manière dynamique, et le premier message étant seulement envoyé si l'indicateur indique que les moments de changement sont commandés de manière dynamique.
